# EUROPEAN PATENT SPECIFICATION

(11) **EP 1 714 118 B1**
(45) Date of publication and mention of the grant of the patent: **04.04.2018**
(21) Application number: 05704708.6
(22) Date of filing: 14.01.2005
(51) Int. Cl.: G01G 19/08

(54) **A DEVICE, A METHOD AND A VEHICLE FOR SHOWING AT LEAST ONE LOAD-RELATED PARAMETER**
EINRICHTUNG UND VERFAHREN UND FAHRZEUG ZUM ZEIGEN MINDESTENS EINES LASTBEZOGENEN PARAMETERS
DISPOSITIF, PROCEDE ET VEHICULE PERMETTANT DE PRESENTER AU MOINS UN PARAMETRE RELATIF A LA CHARGE

(30) Priority: 05.02.2004 SE 0400222
(43) Date of publication of application: 25.10.2006
(73) Proprietor: Scania CV AB (publ), 151 87 Södertälje (SE)
(72) Inventor: RONVALL, Lars, S-641 35 Katrineholm (SE)
(74) Representative: Scania CV AB
(86) International application number: PCT/SE2005/000034
(87) International publication number: WO 2005/075948

(56) References cited:
- GB-A- 2 348 508
- US-A- 4 969 112
- US-A- 5 167 289
- US-B1- 6 363 331

## Description

### BACKGROUND TO THE INVENTION, AND STATE OF THE ART

The present invention relates in general to a device for showing a load-related parameter of a vehicle. In particular, heavy vehicles such as trucks and buses are concerned.

More specifically, the invention relates to a device for showing at least one load-related parameter of a vehicle with at least two wheelshafts, whereby the device comprises at least one sensor unit adapted to detecting the load on one of said wheelshafts, means for detecting the vehicle's total weight, a control unit and a display means, whereby said sensor unit and said detecting means are connected to the control unit, which is adapted to calculating the load-related parameter and is connected to the display means, which is adapted to showing the load-related parameter for a user of the vehicle.

The present invention also relates to a vehicle according to the preamble of claim 9 and a method for showing at least one load-related parameter of a vehicle according to the preamble of claim 10.

The purpose of such heavy vehicles is to carry a load of considerable weight. The load may comprise goods or persons. When using such heavy vehicles, attention has to be paid to ensuring that the load is not so great that the vehicle's permitted total weight is exceeded, that the total permissible weight for each individual wheelshaft, the so-called axle weight, is not exceeded and that the load is relatively evenly distributed on the various wheelshafts. There are numerous different publications which deal with these problems.

US-A-5,167,289 refers to a monitoring system for showing the load distribution on the various wheels and wheelshafts of a heavy vehicle, e.g. a truck. The object of the system is to provide a warning signal if the system detects an overload situation on any of the wheelshafts. The system comprises sensors adapted to detecting the load on each of the vehicle's wheels. The system further comprises a control unit connected to the various sensors and adapted to calculating the load on each wheelshaft as a percentage of the total permissible weight on each wheelshaft. If this percentage weight for any wheelshaft exceeds a certain level, the user has to be warned.

EP-A-625 697 refers to a weighing system for determination of vehicle weights. The object of the system seems to be to be able to determine the weight of the load which is to be delivered by the vehicle and also to avoid the vehicle travelling with too heavy a load. The system comprises a number of sensors for delivering a signal concerning a weight-related parameter, a processing unit for processing said signal and calculating a vehicle weight, and a display means for showing the calculated weight.

GB-A-2 043 921 refers to a load monitoring system for a heavy vehicle. The system comprises a display means on board the vehicle for showing one or more vehicle weights or vehicle loads. It is thereby possible to check that the vehicle's permitted total weight or wheelshaft weights are not exceeded.

GB-A-2 191 868 refers to a device for a vehicle which is adapted to carrying a load. The device comprises a display means whose purpose is to show the magnitude of the load and the position of the centre of gravity of the load.

Another problem in this context is that the load on an individual shaft must not be below a specified level. If the total load is large and a large proportion of the total load bears upon the vehicle's rear wheelshaft or wheelshafts, the load on the vehicle's forward wheelshaft may be too light. In such a situation, the possibility of controlling the vehicle may be impaired and a traffic hazard situation may thereby arise. Problems with driving the vehicle may also arise if the load is incorrectly distributed in such a way that the load on the vehicle's powered axle is too light. In the case of trucks, the load distribution is in principle determined during vehicle loading, i.e. while the vehicle is standing still. However, a possibility which should not be ruled out is that the load may shift while the vehicle is in motion and that the abovementioned undesirable situation may therefore arise. In the case of buses it often happens that passengers move about in the bus while it is in motion, and such movements may in unfavourable circumstances lead to the undesirable situation of incorrectly distributed load.

### SUMMARY OF THE INVENTION

The object of the present invention is to eliminate the abovementioned problems. A further object is to drawn the user's attention to incorrect or dangerous load distribution. A further object is to provide a device which warns the user that there is incorrect or dangerous load distribution.

This object is achieved with the device indicated in the introduction which is characterised in that the load-related parameter comprises the load on the wheelshaft associated with said sensor unit, relative to the vehicle's total weight.

Such a device enables the vehicle's user, e.g. the driver or anyone else involved in loading the vehicle, to obtain information about whether the load on a certain wheelshaft relative to the vehicle's total weight exceeds a certain level, preferably as a percentage of the vehicle's total weight. The user then has the possibility of adopting measures for increasing the percentage load on the wheelshaft concerned and thus avoiding the possible relating problems, e.g. poor vehicle manoeuvrability due to too little load on the forward wheelshaft.

According to an embodiment of the invention, the display means comprises a means for warning the user if the load-related parameter is below a specified value. It is thus possible to ensure that this important information is really brought to the user's notice. The warning means may be adapted to delivering an acoustic and/or visual signal. It is also possible to cause the device to comprise or be connected to means for preventing the vehicle from moving or being set in motion in situations in which the load-related parameter is below a specified value.

According to a further embodiment of the invention, the wheelshaft associated with said sensor unit is a first wheelshaft which constitutes a forward wheelshaft of the vehicle. For the sake of being able to maintain the vehicle's steerability, it is particularly important that there is a specified percentage load on the forward wheelshaft.

According to a further embodiment of the invention, the device comprises a second sensor unit adapted to detecting the load on a second of said wheelshafts which is connected to the control unit. The user is thus enabled to obtain information about the percentage load on each of two wheelshafts as a proportion of the vehicle's total weight.

According to a further embodiment of the invention, the control unit is adapted to calculating a second load-related parameter which comprises the load on the second wheelshaft as a percentage of the total weight, whereby the display means is adapted to showing the second load-related parameter for the user.

According to a further embodiment of the invention, said means for detecting the vehicle's total weight is a sensor unit for each wheelshaft of the vehicle. With advantage, the control unit may be adapted to calculating the total weight as the aggregate of the loads detected on all of the vehicle's wheelshafts.

According to a further embodiment of the invention, said sensor unit comprises a first sensor adapted to detecting the load on a first wheel on a given wheelshaft and a second sensor adapted to detecting the load on a second wheel on the same wheelshaft, whereby each sensor is adapted to providing a signal which depends on the load on the respective wheel.

The object is also achieved with the vehicle indicated in the introduction which is characterised in that the load-related parameter comprises the load on the wheelshaft associated with said sensor unit, as a proportion of the vehicle's total weight.

The object is also achieved with the method indicated in the introduction which is characterised in that the load-related parameter comprises the load on the wheelshaft associated with said sensor unit, as a proportion of the vehicle's total weight.

### BRIEF DESCRIPTION OF THE DRAWINGS

The invention is explained in more detail below on the basis of a description of various embodiments and with reference to the attached drawings, in which
- Fig. 1: depicts a schematic view from above of a vehicle with a device for showing a load-related parameter of the vehicle,
- Fig. 2: depicts an instrument panel of the vehicle and
- Fig. 3: depicts a flowchart illustrating how showing the load-related parameter is accomplished.

### DETAILED DESCRIPTION OF VARIOUS EMBODIMENTS OF THE INVENTION

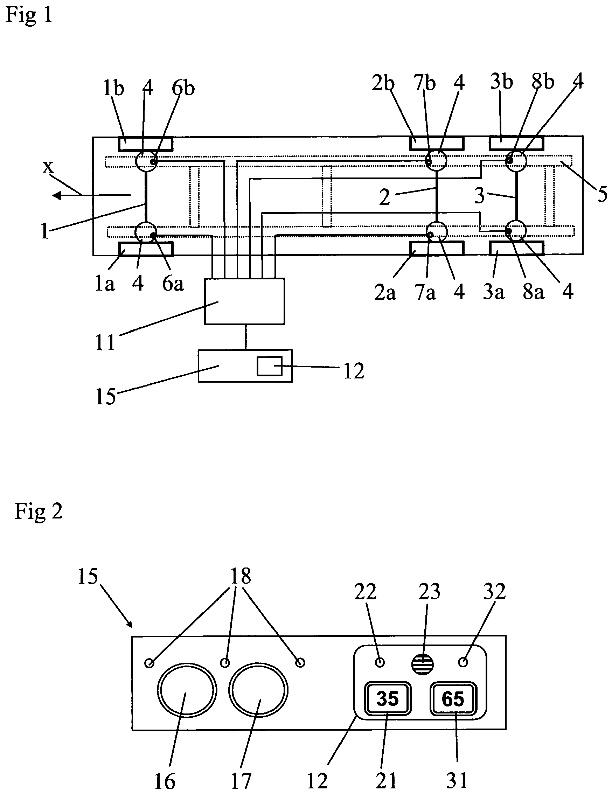

Fig. 1 depicts schematically a vehicle, more specifically a heavy vehicle in the form of a truck. The vehicle is regarded as being driven in a normal forward travel direction x. The invention relates to such heavy vehicles as trucks and buses which are adapted to carrying a load of goods or persons. In the embodiment depicted, the vehicle comprises three wheelshafts 1-3, namely a forward first wheelshaft 1 which is also intended to make it possible to steer the vehicle, an intermediate second wheelshaft 2 which also constitutes the vehicle's powered axle, and a rear third wheelshaft 3 which may comprise a so-called supporting or tag axle which may be in an active supporting position or a passive position, e.g. it may be capable of being raised and lowered between the active supporting position and a retracted passive position. It should be noted that the invention is also applicable to vehicles with a number of wheelshafts other than three, e.g. two, four or more wheelshafts. The invention is also applicable to vehicles intended to tow a trailer with one or more wheelshafts or to tow a so-called semitrailer.

Each wheelshaft 1, 2, 3 comprises a first wheel 1a, 2a, 3a on the left relative to the forward travel direction x and a second wheel 1b, 2b, 3b on the right relative to the forward travel direction x. In the embodiment depicted, the vehicle is provided with pneumatic bellows springs 4 which are arranged on the respective wheelshafts 1, 2, 3 and which in a conventional manner support the vehicle via a framework 5 represented by dotted lines in Fig. 1. The vehicle may comprise one, two or more, e.g. four, such bellows springs 4 on each wheelshaft 1, 2, 3. In the embodiment depicted, two such bellows springs 4 are arranged on each wheelshaft 1, 2, 3. The bellows springs 4 may be regulated in a conventional manner by means of a control unit, e.g. a so-called ELC (Electronic Level Control), which monitors the height of the vehicle's body relative to the wheelshafts 1, 2, 3 in such a way that the vehicle is kept at a correct level.

According to the invention there is a device for showing one or more load-related parameters. In the embodiment depicted, this device comprises a first sensor unit 6a, 6b adapted to detecting the load on the first wheelshaft 1, a second sensor unit 7a, 7b adapted to detecting the load on the second wheelshaft 2, and a third sensor unit 8a, 8b adapted to detecting the load on the third wheelshaft 3. Each sensor unit 6a, 6b; 7a, 7b; 8a, 8b comprises a first sensor 6a, 7a, 8a adapted to detecting the load on the first wheel 1a, 2a, 3a of the respective wheelshaft 1, 2, 3, and a second sensor 6b, 7b, 8b adapted to detecting the load on the second wheel 1b, 2b, 3b of the same wheelshaft 1, 2, 3. Each sensor 6a, 6b, 7a, 7b, 8a, 8b is adapted to providing a signal which depends on the load on the respective wheel 1a, 1b, 2a, 2b, 3a, 3b. In the embodiment depicted, each sensor 6a, 6b, 7a, 7b, 8a, 8b comprises a pressure sensor arranged adjacent to each bellows springs 4 and adapted to detecting the pressure in the respective bellows springs 4. Each such pressure sensor provides a signal which corresponds to the pressure in the bellows springs 4 and thus depends on the load supported by the bellow springs 4 and acting upon the respective wheel.

The device also comprises means for detecting the vehicle's total weight. In the embodiment depicted, these means take the form of the depicted sensors 6a, 6b, 7a, 7b, 8a, 8b which detect the load at each wheel 1a, 1b, 2a, 2b, 3a, 3b of the vehicle. The total weight is thus derived from the aggregate of the loads detected. It should be noted that said means for obtaining the vehicle's total weight may also take a different form.

The device also comprises a control unit 11 connected to the sensors 6a, 6b, 7a, 7b, 8a, 8b. The control unit 11 is adapted to receiving signals from each of the sensors 6a, 6b, 7a, 7b, 8a, 8b and to calculating the load-related parameter on the basis of those signals.

The control unit 11 is also connected to a display means 12 adapted to showing the load-related parameter for a user of the vehicle, e.g. the vehicle's driver. Fig. 1 also indicates an instrument panel 15 for the vehicle. A schematic example of the instrument panel 15 appears in more detail in Fig. 2. The instrument panel 15 comprises conventional instrumentation, e.g. a speedometer 16, a revolution counter 17, warning lamps 18 for various functions of the vehicle, and said display means 12.

According to the present invention, the calculated load-related parameter comprises the load on one of said wheelshafts 1, 2, 3 as a percentage of the vehicle's total weight. The control unit 11 is thus adapted to calculating the vehicle's total weight on the basis of signals from all of the sensors 6a, 6b, 7a, 7b, 8a, 8b and to calculating the load-related parameter by dividing the load on the respective wheelshaft 1, 2, 3, i.e. the aggregate of the loads from the two sensors 6a, 6b, 7a, 7b, 8a, 8b associated with the respective wheelshaft 1, 2, 3, by the vehicle's total weight, i.e. the aggregate of the loads on all the wheels 1a, 1b, 2a, 2b, 3a, 3b. According to a first embodiment, the control unit 11 is adapted to calculating a first load-related parameter pertaining to the first wheelshaft 1, i.e. the vehicle's forward wheelshaft. According to a second embodiment, the control unit 11 is adapted to calculating a second load-related parameter pertaining to the second wheelshaft 2, i.e. the vehicle's powered axle. The control unit 11 may be adapted to calculating one of these parameters or both of them. The control unit 11 may also be adapted to calculating a load-related parameter pertaining to the vehicle's other wheelshafts, in the embodiment depicted the third wheelshaft 3. In cases where the vehicle comprises more wheelshafts, corresponding load-related parameters can of course also be calculated for them.

In the embodiment depicted, the display means 12 comprises a first digital display 21 showing the percentage load-related parameter for the first wheelshaft 1, i.e. the vehicle's forward wheelshaft. In Fig. 2, this parameter is 35%, which means that 35% of the vehicle's load bears upon the forward wheelshaft. If this parameter is below a specified value, the display means 12 is adapted to warning the user of the vehicle. The specified value is vehicle-related and may therefore vary from vehicle to vehicle. In the embodiment depicted, the display means 12 comprises a warning means in the form of a first indicating lamp 22 which lights up or flashes when the first load-related parameter is below the specified value. The display means 12 also comprises a warning means in the form of a loudspeaker 23 or the like which delivers an acoustic warning signal when the first load-related parameter is below the specified value.

In the embodiment depicted, the display means 12 also comprises a second digital display 31 showing the percentage load-related parameter for the second wheelshaft 2, i.e. the vehicle's powered axle. In Fig. 2 this parameter is 65%, which means that 65% of the vehicle's load bears upon the powered axle. In this situation the supporting axle is therefore in a retracted position. If the second parameter is below a specified value, the display means 12 is also adapted to warning the user of the vehicle in a corresponding manner, e.g. by a warning means in the form of a second indicating lamp 32 which lights up or flashes when the second load-related parameter is below the specified value, or by an acoustic warning signal delivered by the loudspeaker 23 when the second load-related parameter is below the specified value. The specified value is likely to differ from one wheelshaft to another. The control unit 11 and the loudspeaker 23 may for example be adapted to delivering different kinds of acoustic signals for the different wheelshafts 1, 2, 3, e.g. tones at different frequencies.

The display means 12 may also comprise more digital displays and indicating lamps for showing the load-related parameter for further wheelshafts of the vehicle, e.g. the third wheelshaft 3. In cases where the vehicle is a tractor unit, it is also possible to show the load-related parameter for one or more of the wheelshafts of a trailer or semitrailer.

The control unit 11 may take numerous different forms. For example, the electronics which may already currently be present in the vehicle may be used for at least part of the tasks incumbent upon the control unit 11. The pressure sensors depicted may for example be connected to the previously indicated ELC which in its turn, via a vehicle network of the CAN (Communication Area Network) type, provides output signals to a control unit which may be adapted to calculating the load-related parameter or parameters and may be connected to the display means 12.

It should be noted that the invention is also applicable to vehicles with another type of wheel suspension and springing, e.g. leaf springs on one or more of the wheelshafts 1, 2, 3. In such an embodiment, said sensors may be adapted to detecting the instantaneous suspension distance from an initial position, which distance depends on the load on the respective wheel. It is also possible to arrange, for example, so-called strain gauges on the springs. Such a strain gauge may also provide a signal which depends on the load on the respective wheel. Other types of load sensors may also be used.

The device may also comprise or be connected to an arrangement for preventing the vehicle moving or being set in motion in situations where the load-related parameter is below a specified value.

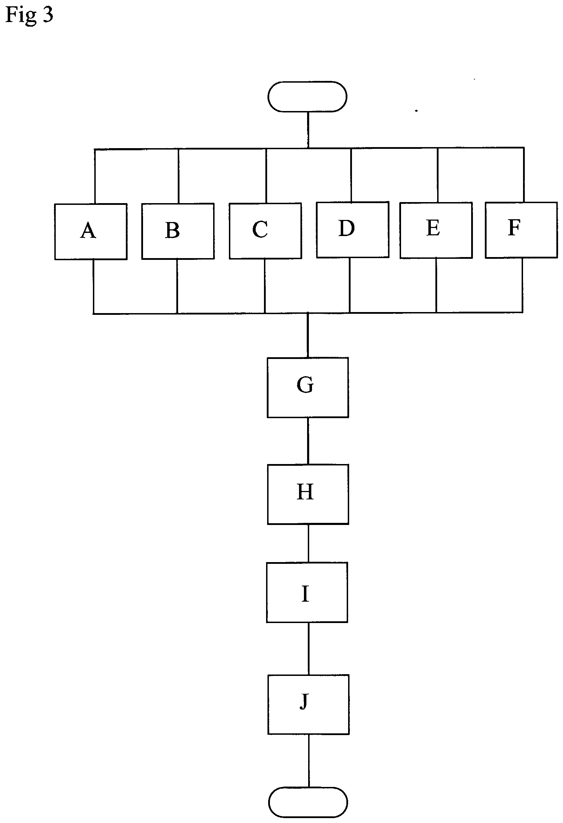

Fig. 3 depicts a flowchart illustrating how showing the load-related parameter may be accomplished. At steps A-F, the load on the various wheels 1a, 1b, 2a, 2b, 3a, 3b is detected by means of respective sensors 6a, 6b, 7a, 7b, 8a, 8b. The values detected are supplied to the control unit 11, whereupon the vehicle's total load and the load-related parameter are calculated at step G for the relevant wheelshaft or wheelshafts. The calculated load-related parameter is supplied to the display means 12 and shown at step H. If the load-related parameter is below a specified value, it is supplied to the aforesaid warning means at step I. If the load-related parameter is below a specified value, it may possibly also be supplied at step J to the aforesaid arrangement for preventing the vehicle moving or being set in motion.

The invention is not limited to the embodiments described above but may be varied and modified within the scopes of the claims set out below.

## Claims

1. A device for showing at least one load-related parameter of a vehicle with at least two wheelshafts (1, 2, 3), whereby the device comprises at least one sensor unit (6a, 6b; 7a, 7b; 8a, 8b) adapted to detecting the load on one of said wheelshafts (1, 2, 3), means for detecting the vehicle's total weight, a control unit (11) and a display means (12), whereby said sensor unit (6a, 6b; 7a, 7b; 8a, 8b) and said detecting means are connected to the control unit (11), which is adapted to calculating the load-related parameter and is connected to the display means (12), which is itself adapted to showing the load-related parameter for a user of the vehicle, **characterised in that** the load-related parameter comprises the load on the wheelshaft (1, 2, 3) associated with said sensor unit (6a, 6b; 7a, 7b; 8a, 8b), as a percentage of the total weight.

2. A device according to claim 1, **characterised in that** the display means (12) comprises a means for warning the user if the load-related parameter is below a specified value.

3. A device according to either of claims 1 and 2, **characterised in that** the wheelshaft (1, 2, 3) associated with said sensor unit is the first wheelshaft (1), which constitutes a forward wheelshaft of the vehicle.

4. A device according to any one of claims 1 to 3, **characterised in that** the device comprises a second sensor unit adapted to detecting the load on a second (2) of said wheelshafts (1, 2, 3) and connected to the control unit (11).

5. A device according to claim 4, **characterised in that** the control unit (11) is adapted to calculating a second load-related parameter which comprises the load on the second wheelshaft as a percentage of the total weight, whereby the display means (12) is adapted to showing the second load-related parameter for the user.

6. A device according to either of claims 4 and 5, **characterised in that** said means for detecting the vehicle's total weight comprise a sensor unit (6a, 6b; 7a, 7b; 8a, 8b) for each wheelshaft (1, 2, 3) of the vehicle.

7. A device according to any one of claims 4-6, **characterised in that** the control unit (11) is adapted to calculating the total weight as the aggregate of the load detected on all of the vehicle's wheelshafts (1, 2, 3).

8. A device according to any one of the foregoing claims, **characterised in that** said sensor unit (6a, 6b; 7a, 7b; 8a, 8b) comprises a first sensor (6a, 7a, 8a) adapted to detecting the load on a first wheel (1a, 2a, 3a) of the respective wheelshaft (1, 2, 3), and a second sensor (6b; 7b; 8b) adapted to detecting the load on a second wheel (1b, 2b, 3b) of the respective wheelshaft (1, 2, 3).

9. A vehicle comprising a device according to claim 1.

10. A method for showing at least one load-related parameter of a vehicle with at least two wheelshafts, whereby the method comprises the steps of:
detecting the load on one of said wheelshafts,
detecting the vehicle's total weight,
calculating the load-related parameter and
showing the load-related parameter for a user of the vehicle,
**characterised in that** the load-related parameter comprises the load on the wheelshaft associated with said sensor unit, as a percentage of the total weight.

## Patentansprüche

1. Einrichtung zur Anzeige mindestens eines lastbezogenen Parameters eines Fahrzeugs mit mindestens zwei Radwellen (1, 2, 3), wobei die Einrichtung mindestens eine Sensoreinheit (6a, 6b; 7a, 7b; 8a, 8b) aufweist, die zum Erfassen der Last auf einer der Radwellen (1, 2, 3) eingerichtet ist, Mittel zum Erfassen des Gesamtgewichts des Fahrzeugs, eine Steuereinheit (11) und ein Anzeigemittel (12), wobei die Sensoreinheit (6a, 6b; 7a, 7b; 8a, 8b) und die Detektormittel mit der Steuereinheit (11) verbunden sind, die zum Berechnen des lastbezogenen Parameters eingerichtet und mit dem Anzeigemittel (12) verbunden ist, das seinerseits zum Anzeigen des lastbezogenen Parameters für einen Nutzer des Fahrzeugs eingerichtet ist, **dadurch gekennzeichnet, dass** der lastbezogene Parameter die Last auf die der Sensoreinheit (6a, 6b; 7a, 7b; 8a, 8b) zugeordnete Radwelle (1, 2, 3) als Prozentsatz des Gesamtgewichts aufweist.

2. Einrichtung nach Anspruch 1, **dadurch gekennzeichnet, dass** das Anzeigemittel (12) ein Mittel zur Warnung des Nutzers aufweist, wenn der lastbezogene Parameter unter einem vorgeschriebenen Wert liegt.

3. Einrichtung nach einem der Ansprüche 1 oder 2, **dadurch gekennzeichnet, dass** die der Sensoreinheit zugeordnete Radwelle die erste Radwelle (1) ist, die eine vordere Radwelle des Fahrzeugs ist.

4. Einrichtung nach einem der Ansprüche 1 bis 3, **dadurch gekennzeichnet, dass** die Einrichtung eines zweite Sensoreinheit aufweist, die zum Erfassen der Last auf eine zweite (2) der Radwellen (1, 2, 3) eingerichtet und mit der Steuereinheit (11) verbunden ist.

5. Einrichtung nach Anspruch 4, **dadurch gekennzeichnet, dass** die Steuereinheit (11) zum Berechnen eines zweiten lastbezogenen Parameters eingerichtet ist, der die Last auf die zweite Radwelle als Prozentsatz des Gesamtgewichts aufweist, wobei das Anzeigemittel (12) zum Anzeigen des zweiten lastbezogenen Parameters für den Nutzer eingerichtet ist.

6. Einrichtung nach einem der Ansprüche 4 oder 5, **dadurch gekennzeichnet, dass** die Mittel zum Erfassen des Gesamtgewichts des Fahrzeugs eine Sensoreinheit (6a, 6b; 7a, 7b; 8a, 8b) für jede Radwelle (1, 2, 3) des Fahrzeugs aufweisen.

7. Einrichtung nach einem der Ansprüche 4 bis 6, **dadurch gekennzeichnet, dass** die Steuereinheit (11) zum Berechnen des Gesamtgewichts der Last als die Gesamtsumme der Last, die auf allen Radwellen (1, 2, 3) des Fahrzeugs erfasst wird, eingerichtet ist.

8. Einrichtung nach einem der vorigen Ansprüche, **dadurch gekennzeichnet, dass** die Sensoreinheit (6a, 6b; 7a, 7b; 8a, 8b) einen ersten Sensor (6a, 7a, 8a) aufweist, der zum Erfassen der Last auf einem ersten Rad (1a, 2a, 3a) der betreffenden Radwelle (1, 2, 3) eingerichtet ist, und einen zweiten Sensor (6b; 7b; 8b), der zum Erfassen der Last auf einem zweiten Rad (1b, 2b, 3b) der betreffenden Radwelle (1, 2, 3) eingerichtet ist.

9. Fahrzeug, das eine Einrichtung gemäß Anspruch 1 aufweist.

10. Verfahren zum Anzeigen mindestens eines lastbezogenen Parameters eines Fahrzeugs mit mindestens zwei Radwellen, wobei das Verfahren die Schritte aufweist:
Erfassen der Last auf einer der Radwellen,
Erfassen des Gesamtgewichts des Fahrzeugs,
Berechnen des lastbezogenen Parameters und
Anzeigen des lastbezogenen Parameters für ein Nutzer des Fahrzeugs,
**dadurch gekennzeichnet, dass** der lastbezogene Parameter die Last auf die der Sensoreinheit zugeordnete Radwelle als Prozentsatz des Gesamtgewichts aufweist.

## Revendications

1. Dispositif permettant de présenter au moins un paramètre relatif à la charge d'un véhicule comprenant au moins deux essieux (1, 2, 3), le dispositif comprenant au moins un ensemble de capteur (6a, 6b ; 7a, 7b ; 8a, 8b) adapté pour détecter la charge sur l'un desdits essieux (1, 2, 3), un moyen permettant de détecter le poids total du véhicule, une unité de commande (11) et un moyen d'affichage (12), ledit ensemble de capteur (6a, 6b ; 7a, 7b ; 8a, 8b) et ledit moyen de détection étant reliés à l'unité de commande (11) qui est adaptée pour calculer le paramètre relatif à la charge et est reliée au moyen d'affichage (12) qui est lui-même adapté pour présenter le paramètre relatif à la charge à un utilisateur du véhicule, **caractérisé en ce que** le paramètre relatif à la charge comprend la charge sur l'essieu (1, 2, 3) associé audit ensemble de capteur (6a, 6b ; 7a, 7b, 8a, 8b) en tant que pourcentage du poids total.

2. Dispositif selon la revendication 1, **caractérisé en ce que** le moyen d'affichage (12) comprend un moyen destiné à avertir l'utilisateur si le paramètre relatif à la charge est inférieur à une valeur spécifiée.

3. Dispositif selon l'une des revendications 1 et 2, **caractérisé en ce que** l'essieu (1, 2, 3) associé audit ensemble de capteur est le premier essieu (1), lequel constitue un essieu avant du véhicule.

4. Dispositif selon l'une quelconque des revendications 1 à 3, **caractérisé en ce que** le dispositif comprend un second ensemble de capteur adapté pour détecter la charge sur un second (2) desdits essieux (1, 2, 3) et relié à l'unité de commande (11).

5. Dispositif selon la revendication 4, **caractérisé en ce que** l'unité de commande (11) est adaptée pour calculer un second paramètre relatif à la charge, qui comprend la charge sur le second essieu en tant que pourcentage du poids total, le moyen d'affichage (12) étant adapté pour présenter à l'utilisateur le second paramètre relatif à la charge.

6. Dispositif selon l'une des revendications 4 et 5, **caractérisé en ce que** ledit moyen permettant de détecter le poids total du véhicule comprend un ensemble de capteur (6a, 6b ; 7a, 7b ; 8a, 8b) pour chaque essieu (1, 2, 3) du véhicule.

7. Dispositif selon l'une quelconque des revendications 4 à 6, **caractérisé en ce que** l'unité de commande (11) est adaptée pour calculer le poids total en tant que la somme des charges détectées sur tous les essieux (1, 2, 3) du véhicule.

8. Dispositif selon l'une quelconque des revendications précédentes, **caractérisé en ce que** ledit ensemble de capteur (6a, 6b ; 7a, 7b ; 8a, 8b) comprend un premier capteur (6a, 7a, 8a) adapté pour détecter la charge sur une première roue (1a, 2a, 3a) de l'essieu respectif (1, 2, 3), et un second capteur (6b, 7b, 8b) adapté pour détecter la charge sur une seconde roue (1b, 2b, 3b) de l'essieu respectif (1, 2, 3).

9. Véhicule comprenant un dispositif selon la revendication 1.

10. Procédé permettant de présenter au moins un paramètre relatif à la charge d'un véhicule comprenant au moins deux essieux, le procédé comprenant les étapes consistant à :
détecter la charge sur l'un desdits essieux,
détecter le poids total du véhicule,
calculer le paramètre relatif à la charge, et
présenter le paramètre relatif à la charge à un utilisateur du véhicule,
**caractérisé en ce que** le paramètre relatif à la charge comprend la charge sur l'essieu associé audit ensemble de capteur en tant que pourcentage du poids total.
